# EUROPÄISCHE PATENTSCHRIFT

(11) **EP 2 865 259 B1**
(45) Veröffentlichungstag und Bekanntmachung des Hinweises auf die Patenterteilung: **04.04.2018**
(21) Anmeldenummer: 13189915.5
(22) Anmeldetag: 23.10.2013
(51) Int. Cl.: A01D 78/10

(54) **Verbesserter Antriebsstrang für einen Großschwader**
Improved drive train for a large swather
Chaîne cinématique améliorée pour une andaineuse

(43) Veröffentlichungstag der Anmeldung: 29.04.2015
(73) Patentinhaber: Kverneland Group Gottmadingen N.V., 78244 Gottmadingen (DE)
(72) Erfinder: Claussen, Johannes, 27330 Asendorf (DE); Gohl, Stefan, 78244 Gottmadingen (DE); Ritter, Markus, 78247 Hilzingen (DE); Joos, Johann, 78135 Radolfzell (DE)
(74) Vertreter: Grünecker Patent- und Rechtsanwälte PartG mbB

(56) Entgegenhaltungen:
- EP-A1- 1 665 922
- EP-A1- 1 782 676
- EP-A1- 2 022 316
- WO-A1-2011/112080
- DE-C1- 19 716 379

## Beschreibung

### Gebiet der Erfindung

Die Erfindung bezieht sich auf eine Heuwerbungsmaschine, insbesondere zum Schwaden von landwirtschaftlichem Erntegut. Die Erfindung kommt vor allem für Großschwader zum Tragen, da ein erhöhter Bedarf an leistungsfähigeren Maschinen mit immer größeren Arbeitsbreiten besteht, um einen wirtschaftlichen Einsatz von Schwadmaschinen zu gewährleisten und dem ständig wachsenden Wettbewerbsdruck gerecht zu werden.

### Stand der Technik

Heuwerbungsmaschinen bzw. Schwadmaschinen sind unter dem Begriff "Großschwader" zwar bereits hinreichend bekannt, jedoch zeichnen sich die meisten dieser Maschinen durch technisch aufwendige und somit kostenintensive Konstruktionen aus. Dies gilt insbesondere in Hinblick auf deren Antriebskonzepte zum Antrieb der zum Schwaden verwendeten Rechkreisel.

Hierbei ist stets zu beachten, dass neben der Realisierung entsprechender Antriebskonzepte für die Rechkreisel die Schwader zum Transport entlang öffentlicher Strassen von einer Arbeits- bzw. Betriebsstellung in eine Transportstellung überführbar sein müssen, um den gesetzlichen Anforderungen an die maximale Transportbreite und -höhe im Straßenverkehr gerecht zu werden.

Weiterhin müssen die Antriebe und Lagerungen der Rechkreisel in einer Weise ausgelegt sein, dass keine unerwünschten Ungleichförmigkeiten im Betrieb auftreten, was unter anderem unweigerlich zu Schwingungen in Teilen der Heuwerbungsmaschine führt, wodurch der Verschleiß der Antriebskomponenten beschleunigt und die Heuwerbungsmaschine anfällig für Reparaturen wird. Bei großen Beugewinkeln der verwendeten Antriebswellen ist zudem der Wartungsbedarf sehr hoch.

Zum Umstellen von einer Arbeitsstellung in eine Transportstellung sehen Antriebskonzepte des Stands der Technik häufig einen Antriebstrang für den oder die in Fahrtrichtung vorderen Rechkreisel vor, welcher aus vielen einzelnen Komponenten besteht und häufig mindestens einen Schlitten umfasst, der das Überführen von der Arbeits- in die Transportstellung ermöglicht.

Beispielsweise offenbart die EP 1 665 922 A1 eine Heuwerbungsmaschine mit zwei vorderen Kreiselrechen, die jeweils über teleskopierbare Traganordnungen um Schwenkachsen schwenkbeweglich mit einem Tragrahmen verbunden sind. Die zweiteiligen Antriebsstränge der vorderen Kreiselrechen umfassen jeweils zwei längenveränderbare Teilantriebsstränge in Form von Gelenkwellen und werden durch eine Stützanordnung zwischen den Teilantriebssträngen abgestützt, wobei die Stützanordnung aus einem mit Halte- und Führungselementen versehenen Winkelgetriebe besteht.
Derartige Konstruktionen sind kompliziert und daher im Allgemeinen störanfällig.
Der vorliegenden Erfindung liegt daher die Aufgabe zugrunde, die oben genannten Nachteile zu überwinden und einen möglichst einfachen, kostengünstigen und wenig störanfälligen Antriebsstrang zur Verfügung zu stellen, der den Anforderungen an einen Großschwader gerecht wird.

### Beschreibung der Erfindung

Die vorstehende Aufgabe wird gelöst durch eine Heuwerbungsmaschine, insbesondere zum Schwaden von landwirtschaftlichem Erntegut, gemäss Anspruch 1. Die Heuwerbungsmaschine kann entweder über einen Eigenantrieb verfügen oder an ein landwirtschaftliches Zugfahrzeug, z. B. einen Traktor, angekuppelt werden. Zum Schwaden einer landwirtschaftlichen Nutzfläche wird die Heuwerbungsmaschine entlang einer die Fläche ausfüllenden Bahn verfahren bzw. gezogen. Je größer die Arbeitsbreite der Heuwerbungsmaschine, d. h. die Breite der von den Rechkreiseln der Heuwerbungsmaschine überstrichenen Spur, ist, desto weniger Fahrten werden benötigt, um eine Fläche zu bearbeiten. Im Folgenden werden die Begriffe "landwirtschaftliche Nutzfläche", "Fläche", "Aufstandsfläche" und "Boden" synonym verwendet.

Bei der erfindungsgemäßen Heuwerbungsmaschine sind die Rechkreisel V-förmig angeordnet, wobei die beiden in Fahrtrichtung vorderen Rechkreisel einen größeren Abstand von einem Tragrahmen der Heuwerbungsmaschine haben als der oder die in Fahrtrichtung hinteren Rechkreisel. Durch die V-förmige Anordnung bilden die vorderen Rechkreisel während des Arbeitsvorgangs einen Mittelschwad, welcher von dem oder den hinteren Rechkreiseln weiter aufgehäuft wird. Die gesamte Arbeitsbreite ergibt sich dabei in etwa als Summe der Durchmesser der vorderen und des oder der hinteren Rechkreisel.

Aufgrund der V-förmigen Anordnung sind die vorderen Rechkreisel, vom Tragrahmen der Heuwerbungsmaschine gesehen, außen an einer Traganordnung in Form je eines Hubarmes angeordnet. Erfindungsgemäß verfügt die Heuwerbungsmaschine über zwei in Fahrtrichtung vordere Hubarme, an denen jeweils ein Rechkreisel drehbar gelagert ist. Die beiden Hubarme sind dabei zu beiden Seiten des Tragrahmens angeordnet. Die vorderen Rechkreisel sind an dem dem Tragrahmen fernen Ende des jeweiligen vorderen Hubarms gelagert und so ausgebildet, dass sie über je einen mehrteiligen Antriebsstrang drehend angetrieben werden können.

Um von einer Transportstellung in eine Arbeits- bzw. Betriebsstellung umstellen zu können, sind die vorderen Hubarme jeweils an dem dem jeweiligen Rechkreisel fernen Ende an dem Tragrahmen schwenkbar gelagert. Dabei kann jeder Hubarm insbesondere über eine, vorzugsweise in Fahrrichtung ausgerichtete, Schwenkachse unmittelbar an dem Tragrahmen gelagert werden. Über die Schwenkachse kann der jeweilige Hubarm beispielsweise über eine hydraulische Kolben- oder Zylindereinheit, einen elektrischen Stellmotor oder dergleichen aus einer im Wesentlichen senkrechten Stellung in eine im Wesentlichen parallele Stellung und umgekehrt verfahren werden. Hierbei beziehen sich die Begriffe "senkrecht" und "parallel" auf die zu bearbeitende landwirtschaftliche Fläche bzw. Aufstandsfläche. "Im Wesentlichen senkrecht" umfasst hierbei auch Stellungen, bei denen ein längenverstellbarer Teil des Hubarms gegenüber der Senkrechten auf der, der Einfachheit halber als eben angenommenen, zu bearbeitenden Fläche um einen vorgegebenen Winkel, der vorzugsweise kleiner als 45°, besonders bevorzugt kleiner als 15° ist, geneigt ist. Insbesondere können die beiden vorderen Hubarme in einer speziellen Ausführung derart in die Transportstellung verschwenkt werden, dass sie zusammen mit dem Tragrahmen in Form eines "A"'s ausgerichtet sind. Ebenso umfasst "im Wesentlichen parallel" hierbei Stellungen, bei denen der längenverstellbare Teil des Hubarms gegenüber der zu bearbeitenden Fläche um einen vorgegebenen Winkel, der vorzugsweise kleiner als 25°, besonders bevorzugt kleiner als 10° ist, insbesondere nach unten, geneigt ist. In der Arbeitsstellung werden die vorderen Hubarme derart nach außen verschwenkt, dass die beispielsweise mit Zinken bestückten Zinkenarme der vorderen Rechkreisel mit dem zu schwadenden Erntegut in Eingriff gebracht werden können. Eine leichte Neigung der Hubarme nach oben in der Arbeitsstellung kann beispielsweise verwendet werden, um eine möglichst bodennahe Anordnung der jeweiligen Schwenkachse zu kompensieren. Durch bodennahe Anordnung der Schwenkachse, z. B. in einer Höhe von 25 cm oder weniger über der zu bearbeitenden Fläche, können die gesetzlichen Anforderungen an die maximale Transporthöhe in Transportstellung leichter erfüllt werden. Andererseits kann bei einer weiter unten beschriebenen L-förmigen Ausbildung des vorderen Hubarms durch leichte Neigung des Hubarms nach unten eine zusätzliche Verkippbarkeit des Rechkreisels um eine parallel zur Fahrtrichtung ausgerichteten Schwenkachse der Lagerung des Rechkreisels an dem vorderen Hubarm ermöglicht werden, ohne eine Kollision der Zinkenarme mit dem Hubarm oder dem Antriebsstrang zu riskieren. Durch eine solche Verkippbarkeit kann sich die Ausrichtung des Rechkreisels eventuellen Bodenkonturen flexibel anpassen.

Erfindungsgemäß ist zumindest einer der beiden vorderen Hubarme längenverstellbar, vorzugsweise teleskopierbar, ausgebildet. Eine Längenverstellung kann dabei durch Übereinanderschieben von zwei oder mehr Segmenten des Hubarms erfolgen. Dementsprechend kann der Hubarm einfach oder mehrfach teleskopierbar ausgebildet sein. Die Anforderungen an die Anzahl der Segmente ergeben sich hierbei aus der erwünschten Arbeitsbreite und den jeweiligen gesetzlichen Bestimmungen zur maximalen Transporthöhe. Es versteht sich, dass die vorliegende Erfindung nicht auf die oben beschriebene Kombination zweier schwenkbarer vorderer Hubarme, von denen einer längenverstellbar ist, beschränkt ist, sondern auch zwei oder mehr längenverstellbare Hubarme aufweisen kann. Insbesondere können beide vordere Hubarme längenverstellbar ausgebildet sein. Dies ist besonders bei einem Vierkreiselschwader von Bedeutung, bei dem zwei hintere Rechkreisel den Mittelschwad weiter aufhäufen. Ein solcher Vierkreiselschwader kann dabei eine Arbeitsbreite von 12 m oder mehr aufweisen. Ebenso können der oder die hinteren Rechkreisel wie die vorderen Rechkreisel an schwenkbar an dem Tragrahmen gelagerten hinteren Hubarmen angeordnet sein, die zusätzlich längenverstellbar sein können. Dadurch lässt sich zudem eine variable Arbeitsbreite realisieren.

Die Längenverstellung des oder der Hubarme kann über eine hydraulische Kolben- oder Zylindereinheit, über einen elektrischen Stellmotor und/oder einen Bautenzug oder dergleichen erfolgen. Zumindest die vorderen Hubarme und/oder vorderen Rechkreisel können über je ein oder mehrere Stützräder verfügen, die sich selbsttätig der Fahrt- und Arbeitsrichtung der Heuwerbungsmaschine anpassen und die Hubarme in der horizontalen Arbeitsstellung gegenüber dem Erdboden abstützen.

Die Rechkreisel können wie oben erwähnt mit Zinken bestückte Zinkenarme aufweisen, die innerhalb eines Kreiselgehäuses gelagert sind und beispielsweise von einer Steuerkurve innerhalb des Kreiselgehäuses steuerbar sind. Die Rechkreisel können so ausgebildet sein, dass die von den äußeren Zinken der Zinkenarme beschriebenen Durchmesser für die vorderen und den oder die hinteren Rechkreisel gleich groß sind. Alternativ können der oder die hinteren Rechkreisel jedoch auch mit einem kleineren Durchmesser ausgebildet sein. Die Drehrichtung der vorderen Rechkreisel ist dabei so gewählt, dass mittig hinter den vorderen Rechkreiseln ein Mittelschwad abgelegt werden kann, der von dem oder den hinteren Rechkreiseln nachfolgend weiter aufgehäuft werden kann.
Der Tragrahmen kann einen Anbaubock aufweisen, mit dem die Heuwerbungsmaschine an ein Zugfahrzeug gekoppelt werden kann. Des Weiteren kann, insbesondere in der Nähe des Massenschwerpunkts der Heuwerbungsmaschine, ein mit dem Tragrahmen fest verbundener Fahrwerksträger vorgesehen sein, der mit Laufrädern bestückt ist. Bei einer Heuwerbungsmaschine, die von einem Zugfahrzeug gezogen wird, können insbesondere ein oder zwei Paare von Laufrädern einachsig oder zweiachsig in der Nähe des Massenschwerpunkts der Heuwerbungsmaschine an dem Fahrwerksträger gelagert sein.
Die einzelnen Rechkreisel werden üblicherweise mechanisch über einen Verbund aus Gelenkwellen und Getrieben in Rotation versetzt. Hierzu weist die Heuwerbungsmaschine zumindest für jeden der vorderen Rechkreisel einen eigenen mehrteiligen Antriebsstrang auf, durch welchen der jeweilige Rechkreisel drehend antreibbar ist. Als zentrale Antriebsquelle kann bei einer gezogenen Heuwerbungsmaschine beispielsweise eine Zapfwelle eines Zugfahrzeuges dienen, mit dem die Heuwerbungsmaschine gezogen wird. Bei einer selbstfahrenden Heuwerbungsmaschine kann der Vortriebsmotor der Heuwerbungsmaschine als zentrale Antriebsquelle dienen. Alternativ kann eine Antriebsquelle auch durch Abgreifen einer Rotation der Achse oder der Achsen der Laufräder einer gezogenen Heuwerbungsmaschine realisiert werden. In allen Fällen ist die zentrale Antriebsquelle direkt oder indirekt mit einer, vorzugsweise in Fahrtrichtung entlang des Tragrahmens verlaufenden Hauptantriebswelle verbunden, die für die Rotation zumindest der vorderen, vorzugsweise aller Rechkreisel verantwortlich ist.

Gemäß der Erfindung umfasst der mehrteilige Antriebsstrang zum Drehen eines an einem längenverstellbaren vorderen Hubarm gelagerten Rechkreisels mindestens eine starre Zwischenwelle, die über eine mit dem vorderen Hubarm verbundene Halterung gehaltert ist. Dabei dreht sich die starre Zwischenwelle angetrieben durch die Hauptantriebswelle in der mit dem jeweiligen vorderen Hubarm verbundenen Halterung. Die starre Zwischenwelle kann beispielsweise mittels zweier Lagerböcke gehaltert werden. Die Lagerböcke können wiederum an einem weiteren, gemeinsamen Halter montiert sein, der Teil der Halterung ist. Die Halterung kann mittels einer eigenen Schwenkachse schwenkbar an dem Hubarm gelagert sein, wobei die Schwenkachse der Halterung parallel zu der Schwenkachse des Hubarms ausgerichtet sein kann.

In einer Weiterbildung kann die Halterung fest mit dem Hubarm verbunden sein, d. h. in der Art, dass die relative Lage der Halterung bzgl. des Teils des Hubarms, mit welchem sie verbunden ist, nicht veränderbar ist. Die Halterung kann beispielsweise durch Verschweißen, Verschrauben, Vernieten, Verkleben oder dergleichen fest, d. h. bzgl. des vorderen Hubarms unverfahrbar, an dem vorderen Hubarms befestigt sein. Der Begriff "starr" ist hier in Bezug auf übliche Materialfestigkeiten der im Stand der Technik für Antriebswellen verwendeten Materialien zu verstehen. Der Begriff impliziert insbesondere, dass die Zwischenwelle nicht längenverstellbar ausgebildet ist.

Gemäß einer Weiterbildung kann die Zwischenwelle an einer dem Tragrahmen zugewandten, im Folgenden "inneren", Seite des vorderen Hubarms gehaltert sein. Insbesondere kann der oben erwähnte gemeinsame Halter an einer dem Tragrahmen zugewandten Seite des vorderen Hubarms befestigt sein. Die Halterung kann dabei derart ausgebildet sein, dass eine Teleskopierbarkeit des vorderen Hubarms nicht behindert wird. Beispielsweise kann die Halterung an einer unteren Seite des Hubarms befestigt sein, wenn die Teleskopierbarkeit mittels eines nach unten offenen U-Profils des zu verschiebenden Teils des Hubarms realisiert wird, oder an einer in Fahrtrichtung rückwärtigen Seite des Hubarms, wenn die Teleskopierbarkeit mittels eines in das Innere des nicht verschobenen Teils verschiebbaren Teils des Hubarms realisiert wird. Durch Anordnen der Halterung in der Art, dass die Teleskopierbarkeit des Hubarms nicht behindert wird, kann ein Bereich, in dem der Hubarm längenverstellbar ist, bzgl. der zugelassenen Transporthöhe und der Anzahl der Segmente des Hubarms maximiert werden.

Erfindungsgemäß ist der mehrteilige Antriebsstrang derart ausgebildet, dass er die Zwischenwelle als Teil einer W-Beuge umfasst. Kreuzgelenke, die einen Beugewinkel größer als 0° aufweisen, laufen prinzipiell ungleichförmig. Da sich Ungleichförmigkeiten addieren, kann die Ungleichförmigkeit eines ersten Kreuzgelenks durch ein zweites Kreuzgelenk ausgeglichen werden. Gemäß dieser Weiterbildung kann die Zwischenwelle so angeordnet sein, dass der Beugewinkel auf der antreibenden, also der dem Tragrahmen zugewandten, inneren Seite in einer Arbeitsstellung dem Beugewinkel auf der Abtriebseite, also der dem Tragrahmen abgewandten, äußeren Seite, ungefähr entspricht. Eine ungefähre Entsprechung ist hierbei auch bei Abweichungen der beiden Beugewinkel voneinander um bis zu 10°, vorzugsweise um bis zu 5° gegeben. Bei Anordnung der Zwischenwelle als Teil einer W-Beuge schneiden sich also die verlängerten Achsen der An- und Abtriebswelle auf der Höhe der Mitte der Zwischenwelle. Durch Anordnung der Zwischenwelle als Teil einer W-Beuge kann eine gleichförmige Drehbewegung des jeweiligen Rechkreisels gewährleistet werden. Damit die Gleichförmigkeit der Drehbewegung nicht gestört wird, wird vorzugsweise auf Drehmomentbegrenzungskupplungen an der Zwischenwelle verzichtet.

Zur Anordnung der Zwischenwelle als Teil einer W-Beuge muss insbesondere die Halterung der Zwischenwelle derart ausgebildet werden, dass die Zwischenwelle eine bestimmte Winkelstellung bezogen auf den Hubarm aufweist. Die benötigte Winkelstellung ergibt sich dabei aus der Lage der Halterung entlang des Hubarms, der Lage des Rechkreisels und der Lage des weiter unten erwähnten Mittelgetriebes entlang der Hauptantriebswelle und in Bezug auf den Hubarm. Vorzugsweise werden die Halterung und der Rechkreisel derart an dem Hubarm angeordnet, dass eine die Zwischenwelle und ein Getriebe des Rechkreisels verbindende Abtriebswelle im Wesentlichen parallel zu dem Hubarm verläuft. Hierbei bedeutet im Wesentlichen parallel, dass ein Winkel der Abtriebswelle zu dem Hubarm, in einer senkrechten Projektion der Anordnung auf die Aufstandsfläche, d. h. in Draufsicht, weniger als 5°, vorzugsweise weniger als 2° beträgt. In einer vorteilhaften Weiterbildung kann die Abtriebswelle im Wesentlichen parallel zu einer Längsachse des Hubarms verlaufen, d. h. ein Winkel der Abtriebswelle mit der Längsachse des Hubarms beträgt weniger als 5°, vorzugsweise weniger als 2°. Bei im Wesentlich parallel zur Längsachse angeordneter Abtriebswelle ändert sich der Winkel zwischen Hubarm und Abtriebswelle während der Längenverstellung des Hubarms und damit des Antriebsstrangs nicht, so dass die W-Beugeanordnung der Zwischenwelle in Arbeitsstellung unabhängig von der Länge des Hubarms vorliegt. Dadurch bleibt die Gleichförmigkeit der Drehbewegung von einer Längenverstellung des Hubarms unberührt. Insbesondere ist die Halterung an einem Segment des Hubarms befestigt, das über die Schwenkachse unmittelbar mit dem Tragrahmen verbunden ist, also nicht bei einer Längenverstellung des Hubarms relativ zum Tragrahmen verschoben wird. Somit bleibt auch der Beugewinkel der Antriebswelle an der Zwischenwelle von einer Längenverstellung des Hubarms unberührt.

Durch Anordnung der Zwischenwelle als Teil einer W-Beuge können unerwünschte Ungleichförmigkeiten im Betrieb vermieden werden, welche zu Schwingungen im Antriebssystem des jeweiligen Rechkreisels führen können, wodurch der Verschleiß der Antriebskomponenten beschleunigt und das gesamte Antriebssystem anfälliger für Reparaturen und Wartungen würde. Dies ist insbesondere für einen maximal ausgefahrenen vorderen Hubarm bei maximaler Arbeitsbreite der Fall.

Gemäß einer Weiterbildung kann die Zwischenwelle an einem ersten Ende durch ein erstes Kreuzgelenk mit einer ersten Gelenkwelle in Eingriff stehen, die ihrerseits mit einem Getriebe des an dem vorderen Hubarm gelagerten Rechkreisels in Eingriff steht. Durch Drehen der Zwischenwelle wird mittels des ersten Kreuzgelenks somit die erste Gelenkwelle gedreht, welche ihrerseits den Rechkreisel antreibt. Somit handelt es sich bei der ersten Gelenkwelle um die oben erwähnte Abtriebswelle der Zwischenwelle. Wie oben beschrieben sind die Zwischenwelle und das Getriebe des Rechkreisels vorzugsweise derart an dem Hubarm angeordnet, dass die erste Gelenkwelle im Wesentlichen parallel zu dem Hubarm ausgerichtet ist. Das erste Kreuzgelenk kann beispielsweise als Einfachkreuzgelenk ausgebildet sein, da bei der oben beschriebenen Anordnung der starren Zwischenwelle große Beugewinkel vermieden werden können. Neben der kostengünstigen Ausführung erweist sich ein Einfachkreuzgelenk auch als deutlich weniger wartungsaufwändig als beispielsweise ein Weitwinkelgelenk.

Gemäß einer weiteren Weiterbildung kann die erste Gelenkwelle mindestens zweifach teleskopierbar sein. Somit kann die erste Gelenkwelle mindestens drei Segmente umfassen, welche ineinander geschoben werden können. Die Anzahl und Länge der Segmente kann in Hinblick auf die maximale Transporthöhe und die Ausbildung des Hubarms gewählt werden. Dabei ist die erste Gelenkwelle vorzugsweise durch den Eingriff mit dem ersten Ende der Zwischenwelle und dem Eingriff mit dem Getriebe des Rechkreisels gehaltert. Gemäß einer weiteren Weiterbildung kann die erste Gelenkwelle mindestens dreifach teleskopierbar sein. Somit kann die erste Gelenkwelle mindestens vier Segmente umfassen, welche ineinander geschoben werden können. Eine dreifach teleskopierbare Gelenkwelle verfügt über einen besonders großen Teleskopweg, so dass sich die Länge des Hubarms im Vergleich zur Transportstellung auf mehr als die doppelte Betriebslänge ausziehen lässt. Die erste Gelenkwelle kann weiterhin ein Drahtseil, welches innerhalb der Gelenkwelle verläuft, und/oder Sperrklinken, welche beim Teleskopieren der Gelenkwelle einratschen, aufweisen, wodurch verhindert wird, dass die Gelenkwelle zu weit ausgefahren wird. Dazu kann das Drahtseil an den beiden Enden der Gelenkwelle verbunden sein und seine Länge gemäß der maximalen Ausdehnung der Gelenkwelle gewählt sein.

Gemäß einer weiteren Weiterbildung kann der vordere Hubarm gemeinsam mit der ersten Gelenkwelle teleskopierbar sein. Dabei kann die Längenverstellung von vorderem Hubarm und erster Gelenkwelle mittels eines gemeinsamen Antriebs, beispielsweise in Form einer hydraulischen Zylinder- oder Kolbeneinheit oder eines elektrischen Stellmotors, erfolgen. Denkbar ist auch eine Ausbildung, bei welcher ein hydraulischer Antrieb die teleskopierbare Gelenkwelle durch Druck auf eine gewünschte Länge ausfährt, wodurch ebenso der vordere Hubarm über den Eingriff der Gelenkwelle in das Getriebe ausgefahren wird. Ein Zurückfahren in die ursprüngliche Länge kann dann ebenso gemeinsam mittels eines Bautenzugs und einer elektrisch betriebenen Winde des Hubarms erfolgen. Damit lässt sich auf einfache Weise ein gemeinsames Teleskopieren von Hubarm und Gelenkwelle realisieren. Durch gemeinsames Teleskopieren von vorderem Hubarm und erster Gelenkwelle lässt sich die Heuwerbungsmaschine besonders einfach von einer Arbeits- in eine Transportstellung überführen.

Gemäß einer Weiterbildung kann die Zwischenwelle an einem zweiten Ende durch ein zweites Kreuzgelenk mit einer zweiten Gelenkwelle in Eingriff stehen, die ein Mittelgetriebe einer Hauptantriebswelle der Heuwerbungsmaschine mit der Zwischenwelle verbindet. Wie oben beschrieben kann die Hauptantriebswelle mittig entlang des Tragrahmens in Fahrtrichtung angeordnet sein und von einer zentralen Antriebsquelle, z. B. einer Zapfwelle eines Zugfahrzeuges, angetrieben werden. Die Hauptantriebswelle kann ein Mittelgetriebe umfassen, um den Antrieb zu den seitlich an den vorderen Hubarmen angeordneten Rechkreiseln zu verzweigen. Die zweite Gelenkwelle entspricht somit der oben erwähnten Antriebswelle für die Zwischenwelle. Zusammen mit der Zwischenwelle und der ersten Gelenkwelle kann die zweite Gelenkwelle wie oben beschrieben in Form einer W-Beuge in Arbeitsstellung angeordnet sein. Die zweite Gelenkwelle ist auf der Tragrahmenseite durch den Eingriff in das Mittelgetriebe gehaltert und auf der dem Tragrahmen abgewandten Seite durch den Eingriff in das zweite Ende der Zwischenwelle gehaltert. Wie das erste Kreuzgelenk kann auch das zweite Kreuzgelenk beispielsweise als Einfachkreuzgelenk ausgebildet sein, da bei der oben beschriebenen Anordnung der starren Zwischenwelle große Beugewinkel vermieden werden können. Neben der kostengünstigen Ausführung erweist sich ein Einfachkreuzgelenk auch als deutlich weniger wartungsaufwändig als beispielsweise ein Weitwinkelgelenk.

Gemäß einer weiteren Weiterbildung kann das Mittelgetriebe mindestens einen Abtrieb mit einer Winkelstellung in einem Bereich von 30° bis 60°, vorzugsweise mit einer Winkelstellung von 30°, 45° oder 60° aufweisen, wobei die zweite Gelenkwelle mit dem mindestens einen Abtrieb des Mittelgetriebes in Eingriff steht. Die Winkelstellung bezieht sich hierbei auf den Winkel zwischen der zweiten Gelenkwelle und der Hauptantriebswelle. Durch den mindestens einen Abtrieb wird der Antrieb zu den seitlich an den Hubarmen angeordneten Rechkreiseln verzweigt. Beispielsweise kann das Mittelgetriebe zu beiden vorderen Hubarmen hin je einen Abtrieb zum Antreiben des jeweiligen Rechkreisels umfassen. Zusätzlich kann das Mittelgetriebe einen oder zwei Abtriebe zu dem oder den hinteren Hubarmen hin umfassen. Alternativ kann die Hauptantriebswelle je ein separates Mittelgetriebe für den Antrieb der vorderen bzw. der hinteren Rechkreisel aufweisen.

Der Winkelbereich von 30° bis 60° stellt einen Kompromiss aus der Zielvorgabe eines möglichst kleinen Beugewinkels an der Zwischenwelle, einer möglichst kleinen Winkelstellung des Abtriebs und einer möglichst großen senkrechten Distanz zwischen Schwenkachse des jeweiligen Hubarms und Hauptantriebswelle dar. Je kleiner die Beugewinkel an der Zwischenwelle sind, desto geringer sind mögliche Restungleichförmigkeiten der Drehbewegung und der Wartungsbedarf des Antriebstrangs. Je weiter die Schwenkachse, an der der entsprechende vordere Hubarm gelagert ist, von der Hauptantriebswelle, die im Allgemeinen mittig entlang des Tragrahmens angeordnet ist, entfernt angeordnet ist, desto größer wird die maximale Arbeitsbreite der Heuwerbungsmaschine. Idealerweise kann die Schwenkachse in einem solchem Abstand von der Hauptantriebswelle angeordnet werden, dass die maximale Transportbreite der Heuwerbungsmaschine ausgenutzt wird. In einer senkrechten Projektion, d. h. Draufsicht, gilt, dass bei einer Winkelstellung des Abtriebs bzgl. der Hauptantriebswelle von α und unter der Annahme, dass Hubarm und die parallel verlaufende erste Gelenkwelle orthogonal zur Hauptantriebswelle ausgerichtet sind, die Beugewinkel an der die Zwischenwelle umfassenden W-Beuge in der Arbeitsstellung jeweils β = 90° - α betragen. Da mit größer werdendem Abstand des Abtriebs von dem Schnittpunkt von vorderem Hubarm und Hauptantriebswelle die Winkelstellung α abnimmt, nimmt somit automatisch der Beugewinkel β zu. Umgekehrt nimmt der Beugewinkel β bei kleinerem Abstand des Abtriebs von dem Schnittpunkt ab, während die Winkelstellung α des Abtriebs zunimmt. Eine Winkelstellung zwischen 30° und 60° liefert hierbei einen guten Kompromiss. Bei Berücksichtigung eventueller Neigungswinkel der ersten bzw. zweiten Gelenkwelle bzgl. der zu bearbeitenden Fläche, ergeben sich keine qualitativen Änderungen an dem oben beschriebenen Zusammenhang. Dies gilt auch für geringfügige Änderungen der Beugewinkel an der Zwischenwelle wie oben beschrieben durch Längenverstellung des Hubarms oder durch Verschwenken des Hubarms um die Schwenkachse aufgrund von Anpassungen an Bodenkonturen der zu bearbeitenden Fläche (siehe unten).

Die zweite Gelenkwelle steht in dieser Weiterbildung mit dem mindestens einen Abtrieb des Mittelgetriebes in Eingriff und wird somit durch den Eingriff mit dem Mittelgetriebe und den Eingriff mit dem zweiten Ende der Zwischenwelle gehaltert. In einer speziellen Weiterbildung kann also ein Antriebsstrang für je einen vorderen Rechkreisel vorgesehen sein, der wie oben beschrieben eine starre Zwischenwelle und erste und zweite Gelenkwellen umfasst, wobei ein Mittelgetriebe des Hauptwellenantriebs den jeweiligen Rechkreisel über einen auf der jeweiligen Seite des Rechkreisels angeordneten Abtrieb, die zweite Gelenkwelle, die Zwischenwelle und die erste Gelenkwelle antreibt. Insbesondere kann für jeden längenverstellbaren Hubarm eine derartige dreiteilige Wellenanordnung des jeweiligen Antriebsstrangs vorgesehen sein.

Der mindestens eine Abtrieb kann weiterhin derart ausgebildet sein, dass eine Winkelstellung der in den Abtrieb eingreifenden zweiten Gelenkwelle gegenüber der Hauptantriebswelle um einen vorgegebenen Winkel von 40° oder weniger veränderbar ist. Dies ist besonders dann von Vorteil, wenn die nachfolgend beschriebene Anordnung des zweiten Kreuzgelenks bzgl. der Schwenkachse des vorderen Hubarms nicht exakt ist und somit ein Verkippen der zweiten Gelenkwelle bzgl. seiner Lage in der Arbeitsstellung beim Verschwenken des Hubarms aus der Arbeitsstellung in die Transportstellung unvermeidbar ist. Ebenso erlaubt eine veränderbare Winkelstellung ein Verschwenken des weiter unten beschriebenen, L-förmigen vorderen Hubarms zwischen einer Transport- und einer Arbeitsstellung. Eine innerhalb vorgegebener Winkelbereiche winkelveränderbare Anordnung des Eingriffs der zweiten Gelenkwelle in den entsprechenden Abtrieb des Mittelgetriebes erlaubt dabei ein Verkippen der zweiten Gelenkwelle, ohne mechanische Beschädigungen zu verursachen. Eine solche Winkelveränderbarkeit kann beispielsweise mittels Einsatz eines dritten Kreuzgelenks im Eingriff mit dem Abtrieb realisiert werden.

Gemäß einer Weiterbildung kann das zweite Kreuzgelenk in einer Arbeitsstellung der Heuwerbungsmaschine im Wesentlichen in einer von einer Verlängerung einer Schwenkachse des vorderen Hubarms und einer Senkrechten auf einer Aufstandsfläche der Heuwerbungsmaschine gebildeten Ebene liegen. Die Aufstandsfläche der Heuwerbungsmaschine wird hierbei ohne Einschränkung des beschriebenen Gegenstands als eben angenommen. Bei unebenen zu bearbeitenden Nutzflächen kann durch Schwenken des Hubarms um die Schwenkachse eine Anpassung an die Unebenheiten automatisch erfolgen. Um den vorderen Hubarm mit dem vorderen Rechkreisel auf einfache Weise von einer Arbeitsstellung in eine Transportstellung und umgekehrt bringen zu können, wird in dieser Weiterbildung die Halterung der Zwischenwelle derart an dem vorderen Hubarm befestigt, dass das bzgl. des Tragrahmens innen liegende zweite Kreuzgelenk in einer Arbeitsstellung möglichst nah an der senkrechten Ebene liegt, in der die Schwenkachse des vorderen Hubarms angeordnet ist. Dadurch fungiert das zweite Ende der Zwischenwelle bzw. das daran angeordnete zweite Kreuzgelenk als Winkelgelenk, an dem der Antriebsstrang des vorderen Rechkreisels beim Wechsel von Arbeitsstellung in Transportstellung angewinkelt wird und umgekehrt beim Wechsel von Transportstellung in Arbeitsstellung gestreckt wird. Hierbei bedeutet im Wesentlichen, dass ein senkrechter Abstand des zweiten Kreuzgelenks von der gebildeten senkrechten Ebene weniger als 30 cm, vorzugsweise weniger als 15 cm beträgt.

Bei einer weiter unten beschriebenen L-förmigen Ausbildung des Hubarms kann die Zwischenwelle beispielsweise so an einer Verbindungsstelle eines langen und eines kurzen Schenkels des Hubarms oder an dem kurzen Schenkel angeordnet sein, dass die obige Bedingung in der Arbeitsstellung erfüllt ist. Beim Umschalten zwischen Arbeits- und Transportstellung kann das zweite Kreuzgelenk in dieser Ausbildung eine gekrümmte Kurve zum Tragrahmen hin vollführen, die umso kürzer ausfällt, je näher das zweite Kreuzgelenk an der Schwenkachse angeordnet ist. Um einen möglichst spannungsfreien Wechsel zwischen den beiden Stellungen zu ermöglichen, kann das zweite Kreuzgelenk in einer speziellen Weiterbildung im Wesentlichen auf einer Verlängerung der Schwenkachse des vorderen Hubarms angeordnet sein. Hierbei bedeutet im Wesentlichen, dass das zweite Kreuzgelenk weniger als 10 cm, vorzugsweise weniger als 5 cm von der Verlängerung der Schwenkachse entfernt ist. Diese Weiterbildung ist besonders für gerade ausgebildete Hubarme von Vorteil. Eine Abweichung von der Verlängerung der Schwenkachse, z. B. wie in obiger Weiterbildung dargestellt entlang eines kurzen Schenkels eines L-förmigen vorderen Hubarms, kann wie oben beschrieben durch eine veränderbare Winkelstellung der zweiten Gelenkwelle im Eingriff mit dem Abtrieb des Mittelgetriebes kompensiert werden.

Der vordere Hubarm kann in einer Arbeitsstellung frei schwenkbar an dem Tragrahmen der Heuwerbungsmaschine gelagert sein. Dadurch kann eine Bodenkonturanpassung der Stellung des Hubarms an eine eventuell unebene, zu bearbeitende Fläche erfolgen. Die oben beschriebene Weiterbildung wurde in Bezug auf eine idealisiert angenommene, ebene Aufstandsfläche beschrieben. Bei Verschwenken des Hubarms um seine Schwenkachse zum Ausgleich von Unebenheiten des Bodens ändern sich im Allgemeinen die Winkelstellungen der zweiten Gelenkwelle sowohl auf der Seite der Zwischenwelle als auch auf der Seite des Abtriebs. Insbesondere kann sich das zweite Kreuzgelenk im Fall des unten beschriebenen, im Wesentlichen L-förmigen Hubarms relativ zu der oben beschriebenen Ebene verschieben, wenn der Hubarm durch Unebenheiten des Bodens verschwenkt wird. Jedoch sind sowohl die Änderungen der Winkelstellungen als auch die Verschiebungen des zweiten Kreuzgelenks aufgrund der beschriebenen Anordnung der Zwischenwelle so klein, dass die sich daraus ergebenden Ungleichförmigkeiten der Drehbewegung vernachlässigbar sind. Die Änderungen der Winkelstellungen sind im Betrieb auf landwirtschaftlichen Nutzflächen deutlich kleiner als 10°, vorzugsweise deutlich kleiner als 5°.

Gemäß einer weiteren Weiterbildung kann, wie bereits angedeutet, der vordere Hubarms im Wesentlichen L-förmig ausgebildet sein, somit also wenigstens einen kurzen und einen langen Schenkel umfassen. Im Wesentlichen L-förmig bedeutet hier, dass der Winkel zwischen kurzem und langem Schenkel nicht exakt 90° betragen muss, sondern um bis zu 15° davon abweichen kann. In dieser Weiterbildung kann der kurze Schenkel des vorderen Hubarms mittels der Schwenkachse schwenkbar an dem Tragrahmen der Heuwerbungsmaschine gelagert sein, wobei die Längenverstellbarkeit des vorderen Hubarms durch eine Längenverstellbarkeit seines langen Schenkels realisiert werden kann. Die Zwischenwelle kann wie oben beschrieben im Bereich einer Verbindungsstelle des kurzen und des langen Schenkels gehaltert sein. Der Bereich der Verbindungsstelle erstreckt sich dabei bis zu einem Abstand von 50 cm, vorzugsweise von 20 cm, ab einem Schnittpunkt der Längsachsen des kurzen und des langen Schenkels. Vorzugsweise kann der L-förmige Hubarm derart an der Schwenkachse gelagert sein, dass der gebildete Winkel des Hubarms zur zu bearbeitenden Fläche hin offen ist. Dadurch lässt sich eine Verkippbarkeit des Rechkreisels um eine Schwenkachse parallel zur Fahrtrichtung realisieren.

Wenn ein L-förmiger Hubarm wie hier beschrieben mit dem kurzen Schenkel schwenkbar an dem Tragrahmen gelagert ist, kann bei geeignetem Querschnittsprofil des Tragrahmens eine erhebliche Reduzierung der Transportbreite erreicht werden. Bei Umschalten in die Transportstellung kann der Hubarm nämlich derart verschwenkt werden, dass der in der Arbeitsstellung im Wesentlichen senkrechte kurze Schenkel nunmehr im Wesentlichen parallel zur Fläche zum Inneren des Tragrahmens hin, d. h. zur Seite der Hauptantriebswelle hin, verläuft, so dass der nun längen reduzierte lange Schenkel im Wesentlichen senkrecht und möglichst nahe an der Hauptantriebswelle angewinkelt wird. Dadurch werden eventuell seitlich ausladende Elemente wie die Zinken der Zinkenarme oder Stützräder des Hubarms und/oder des Rechkreisels in Transportstellung bzgl. einer Ausbildung des Hubarms in geradliniger Form nach innen, d. h. zur Hauptantriebswelle hin, verlagert, wodurch die gesamte Transportbreite reduziert wird. Entsprechend weit von der Hauptantriebswelle entfernt kann die Schwenkachse ausgebildet werden, wodurch sich im Gegenzug die maximale Arbeitsbreite erhöht.

Bei im Wesentlichen L-förmiger Ausbildung des Hubarms ist zudem die oben beschriebene Anordnung des zweiten Kreuzgelenks in einer Arbeitsstellung in der von der Verlängerung der Schwenkachse des vorderen Hubarms und der Senkrechten auf der Aufstandsfläche gebildeten Ebene besonders vorteilhaft. Bei Anordnung des zweiten Kreuzgelenks weiter innen, d. h. zur Seite der Hauptantriebswelle hin, kann die Bodenfreiheit der Heuwerbungsmaschine in Transportstellung unzulässig reduziert werden. Bei Anordnung des zweiten Kreuzgelenks weiter außen, d. h. zur Seite des Rechkreisels hin, kann die Teleskopierbarkeit des Hubarms und die Bewegungsfreiheit der zweiten Gelenkwelle beim Verschwenken in die Transportstellung ungünstig beeinflusst werden.

Gemäß einer weiteren Weiterbildung kann die zweite Gelenkwelle durch ein drittes Kreuzgelenk mit dem Abtrieb des Mittelgetriebes in Eingriff stehen, wobei das dritte Kreuzgelenk als ein Freilaufgelenk mit einem Drehmomentbegrenzer ausgebildet sein kann. Durch Verwendung eines solchen dritten Kreuzgelenks kann auf einfache Weise eine veränderbare Winkelstellung der zweiten Gelenkwelle bzgl. ihrer Stellung in der Arbeitsstellung erreicht werden. Auch aufgrund der zuvor erwähnten eventuellen Unebenheiten in der zu bearbeitenden landwirtschaftlichen Nutzfläche, die über das oder die Stützräder des Hubarms und/oder des Rechkreisels auf diesen übertragen werden, ist der Einsatz eines dritten Kreuzgelenks von Vorteil. Durch Verwendung eines Freilaufgelenks für das dritte Kreuzgelenk kann sich die zweite Gelenkwelle beim Umstellen in die Transportstellung in eine spannungsfreie Stellung eindrehen. Dies ist insbesondere im Hinblick auf ein spiegelsymmetrisch gegenüberliegendes weiteres Kreuzgelenk eines Antriebsstrangs eines linken vorderen Rechkreisels von Bedeutung, da im Allgemeinen beide vordere Hubarme gemeinsam in die Transportstellung verschwenkt werden. Ohne Freilaufgelenk würde der gegenüberliegende Antriebsstrang das Eindrehen der zweiten Gelenkwelle blockieren, was zu mechanischen Beschädigungen führen würde. Der Einsatz einer Drehmomentbegrenzungskupplung als Drehmomentbegrenzer schließt eine Überlastung der Gelenkwellen des Antriebsstrangs aus.

Gemäß einer weiteren Weiterbildung kann die zweite Gelenkwelle mindestens einfach teleskopierbar ausgebildet sein. Insbesondere bei L-förmiger Ausbildung des vorderen Hubarms und Anordnung der Zwischenwelle in der Art, dass das zweite Kreuzgelenk von der verlängerten Schwenkachse beabstandet ist, ist eine längenverstellbare Ausbildung der zweiten Gelenkwelle vorteilhaft, um ein möglichst spannungsfreies Verschwenken des Hubarms in die Transport- bzw. Arbeitsstellung zu ermöglichen. Dabei kann es ausreichend sein, die zweite Gelenkwelle einfach teleskopierbar mit einem minimalen Teleskopierweg auszubilden, welcher sich aus der Differenz der Abstände des zweiten Kreuzgelenks von dem Abtrieb des Mittelgetriebes in Transport- bzw. in Arbeitsstellung ergibt. Im Vergleich zur Längenverstellbarkeit der ersten Gelenkwelle fällt die benötigte Längenverstellbarkeit der zweiten Gelenkwelle auch bei L-förmiger Ausbildung des Hubarms sehr gering aus.

In einer Weiterführung kann eine maximale Arbeitsbreite der Heuwerbungsmaschine zwischen 10 m und 14 m, vorzugsweise zwischen 11 m und 12,5 m liegen. Geht man von einer maximal zugelassenen Transporthöhe von 4 m aus, so kann gemäß der oben beschriebenen Ausbildung eines Großschwaders, insbesondere eines Vierkreiselschwaders, eine maximale Arbeitsbreite von etwas weniger als viermal 4 m, also etwa 15 m, erreicht werden. Durch unvermeidbare Sicherheitsabstände, beispielsweise der Schwenkachse vom Boden, reduziert sich diese maximale Arbeitsbreite auf die angegebenen 10 m bis 14 m. Wie oben bereits erwähnt stellt die vorliegende Erfindung auch einen Vierkreiselschwader zur Verfügung, bei dem die Heuwerbungsmaschine zwei in Fahrtrichtung hintere Rechkreisel umfasst, die drehbar an je einem hinteren Hubarm gelagert sind, wobei mindestens einer der hinteren Hubarme schwenkbar an dem Tragrahmen gelagert ist. Darüber hinaus können ein oder beide hintere Hubarme analog zu dem beschriebenen vorderen Hubarm längenverstellbar ausgebildet sein. Es versteht sich, dass die oben beschriebenen Weiterbildungen, insbesondere in Bezug auf den Antriebsstrang, auch auf den oder die längenverstellbaren hinteren Hubarme angewandt werden können. Insbesondere kann die Heuwerbungsmaschine für jeden längenverstellbaren Hubarm, egal ob vorderer oder hinterer Hubarm, je einen dreiteiligen Antriebsstrang nach den oben beschriebenen Ausführungen umfassen, der jeweils in einen eigenen Abtrieb eines oder mehrerer Mittelgetriebe der Hauptantriebswelle eingreift. Durch V-förmige Anordnung der vorderen und hinteren Rechkreisel lässt sich dann eine maximale Arbeitsbreite realisieren.

Mit den oben beschriebenen Ausführungen eines längenverstellbaren Hubarms und entsprechenden Antriebsstrangs lässt sich auf einfache, kostengünstige und wenig störanfällige Weise eine Heuwerbungsmaschine mit maximaler Arbeitsbreite realisieren. Insbesondere kann auf komplexe Elemente des Antriebsstrangs wie Teleskopschlitten und Winkelhebel verzichtet werden. Darüber hinaus ist die Anzahl der benötigten Komponenten äußerst gering, was Konstruktions- und Wartungskosten reduziert.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.
- Figur 1: stellt einen Querschnitt einer beispielhaften Ausführung einer Heuwerbungsmaschine mit längenverstellbarem rechtem vorderem Hubarm gemäß der vorliegenden Erfindung in Arbeitsstellung dar.
- Figur 2: stellt eine Draufsicht einer beispielhaften Ausführung einer Heuwerbungsmaschine mit längenverstellbarem rechtem vorderem Hubarm gemäß der vorliegenden Erfindung in Arbeitsstellung dar.
- Figur 3: ist eine isometrische Darstellung einer beispielhaften Ausführung einer Heuwerbungsmaschine mit längenverstellbarem rechtem vorderem Hubarm gemäß der vorliegenden Erfindung in Transportstellung.

In den Figuren sind gleiche oder gleichartige Elemente mit den gleichen Bezugszeichen versehen. Eine wiederholte Beschreibung dieser Elemente wird daher aus Gründen der Übersichtlichkeit im Folgenden vermieden.

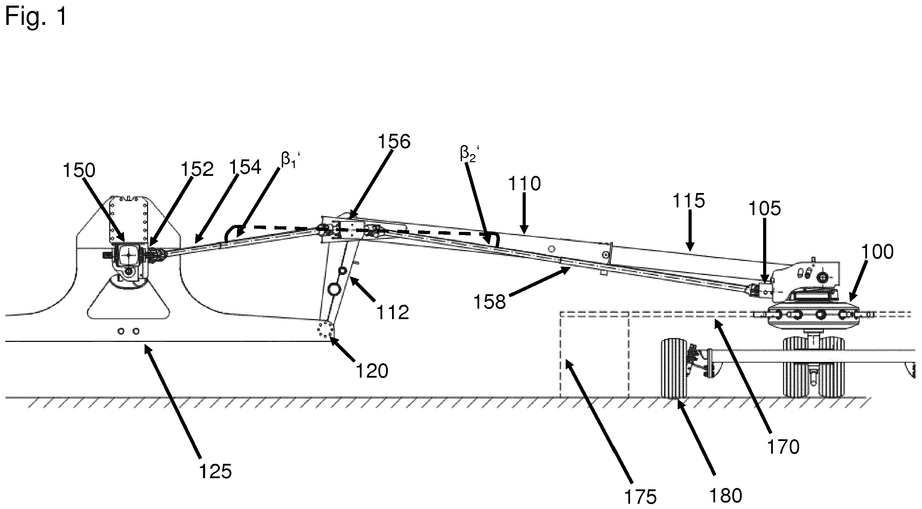

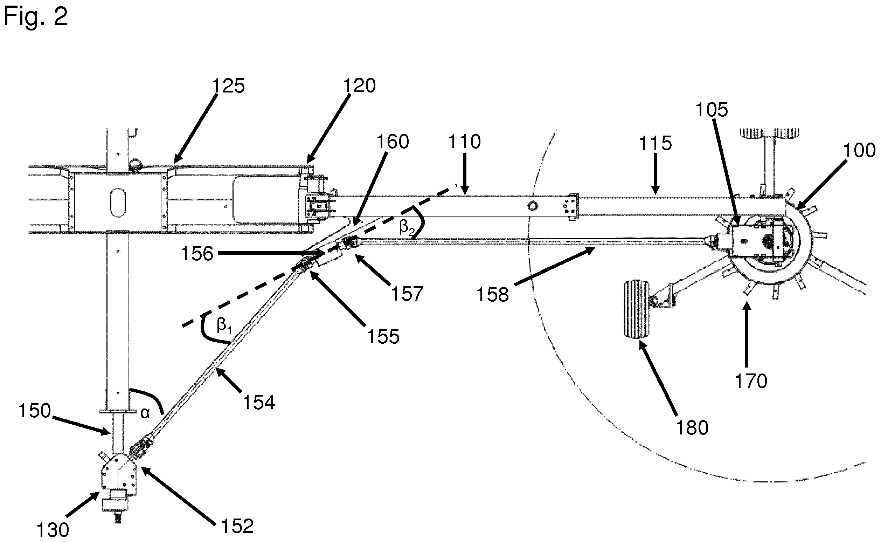

Die Figuren 1 und 2 stellen einen Querschnitt bzw. eine Draufsicht einer beispielhaften Ausführung einer Heuwerbungsmaschine gemäß der vorliegenden Erfindung in Arbeitsstellung dar. Exemplarisch ist hier der mittlere Teil der Heuwerbungsmaschine zusammen mit dem rechten vorderen Hubarm gezeigt. Es versteht sich, dass die Heuwerbungsmaschine linksseitig einen äquivalenten Hubarm und Rechkreisel mit eigenem Antriebsstrang sowie weiterhin einen oder zwei hintere Hubarme mit Rechkreiseln umfassen kann, wie es für Drei- bzw. Vierkreiselschwader üblich ist. Der rechte vordere Hubarm umfasst hier exemplarisch einen nicht verschiebbaren, von einer Hauptantriebswelle 150 aus betrachtet inneren Teil 110 und einen verschiebbaren, von der Hauptantriebswelle 150 aus betrachtet äußeren Teil 115. Am bzgl. des Tragrahmens 125 äußeren Ende des verschiebbaren Teils 115 ist ein Rechkreisel 100 drehbar gelagert. Der Rechkreisel 100 verfügt über eine Vielzahl von mit Zinken 175 versehenen Zinkenarmen 170, die zum Schwaden des Ernteguts kreisförmig rotieren und in dieser Figur durch gestrichelte Linien angedeutet sind. Des Weiteren ist der Rechkreisel durch Stützräder 180 gegenüber dem Boden abgestützt, der in Figur 1 schraffiert angedeutet ist. Der Boden bzw. die Aufstandsfläche ist hier eben gezeigt. Die Stellung des Hubarms kann jedoch durch Verschwenken eventuelle Unebenheiten der zu bearbeitenden Fläche ausgleichen.

In der hier dargestellten Weiterbildung ist der Hubarm L-förmig ausgebildet. Dabei bilden der nicht verschiebbare innere Teil 110 und der verschiebbare äußere Teil den langen Schenkel des Hubarms. Der kurze Schenkel 112 des Hubarms ist dabei derart mit dem langen Schenkel und dem Tragrahmen verbunden, dass der von dem L gebildete Winkel zum Boden hin offen ist. In der hier gezeigten Ausführung ist zudem der Winkel zwischen langem und kurzen Schenkel etwas größer als 90° und der kurze Schenkel so lang ausgebildet, dass der lange Schenkel leicht gegenüber dem Boden nach unten (in Figur 1) geneigt ist. Dadurch kann wie bereits beschrieben eine Verkippbarkeit des Rechkreisels 100 um eine durch ein Kreuz und einen Ring über dem Rechkreisel 100 in Figur 1 angedeutete Schwenkachse der Lagerung des Rechkreisels ermöglicht werden.

Der gezeigte Hubarm ist hier mit seinem kurzen Schenkel 112 über eine Schwenkachse 120 unmittelbar an dem Tragrahmen 125 gelagert und kann somit inklusive des Rechkreisels 100 aus einer im Wesentlichen parallelen Arbeitsstellung in eine im Wesentlichen senkrechte Transportstellung verschwenkt werden. Die Schwenkachse 120 ist hier exemplarisch in Fahrtrichtung (in der Figur 2 nach oben) ausgerichtet. Zum Umstellen auf eine Transportstellung kann der äußere Teil 115 des vorderen Hubarms in den inneren Teil 110 geschoben werden. Dies kann wie oben beschrieben über eine hydraulische Zylinder- oder Kolbeneinheit oder einen elektrischen Stellmotor und/oder Bautenzug oder dergleichen (nicht dargestellt) geschehen. Bei Verschieben des äußeren Teils 115 des Hubarms wird auch die mehrfach teleskopierbare Gelenkwelle 158 des Antriebsstrangs für den Rechkreisel 100 in der Länge verändert.

Die hier dargestellte Heuwerbungsmaschine ist zum Ziehen durch eine Zugmaschine ausgelegt. Der Tragrahmen 125 kann dazu an einem entlang einer mittleren Achse der Heuwerbungsmaschine verlaufenden Mittelteil einen Anbaubock (nicht dargestellt)aufweisen, mit dem die Heuwerbungsmaschine an die Zugmaschine gekoppelt werden kann. Über den Anbaubock kann auch die im Mittelteil verlaufende Hauptantriebswelle 150 der Heuwerbungsmaschine in Eingriff mit einer Zapfwelle der Zugmaschine gebracht werden. Der Mittelteil ist weiterhin mit einem Fahrwerksträger (nicht dargestellt) mit einem oder mehreren Paaren von Laufrädern verbunden. In der Draufsicht der Figur 2 befände sich der Anbaubock oberhalb des dargestellten Bereichs, während sich der Fahrwerksträger unterhalb des dargestellten Bereichs befände.

Auf der Seite des nicht dargestellten Fahrwerksträgers umfasst die Hauptantriebswelle 150 ein Mittelgetriebe 130 mit hier exemplarisch dargestellten zwei Abtrieben 152. Über den Abtrieb 152 treibt die Hauptantriebswelle 150 eine zweite Gelenkwelle 154 an, die mit einer Zwischenwelle 156 in Eingriff steht. Die Zwischenwelle 156 ist, wie hier exemplarisch dargestellt, mit Lagerböcken an einer Halterung 160 gelagert, die fest mit dem inneren Teil 110 des Hubarms verbunden ist. Über die Zwischenwelle 156 treibt die zweite Gelenkwelle 154 weiterhin die mehrfach teleskopierbare erste Gelenkwelle 158 an, die ihrerseits in Eingriff mit einem Getriebe 105 des Rechkreisels 100 steht. Über den dreiteiligen Antriebsstrang aus zweiter Gelenkwelle 154, Zwischenwelle 156 und erster Gelenkwelle 158 treibt somit die Hauptantriebswelle 150 den Rechkreisel 100 zur Rotation an.

Wie hier dargestellt ist die Halterung der Zwischenwelle 156 so in der Nähe der Verbindungsstelle von innerem Teil 110 des langen Schenkels und kurzem Schenkel 112 des Hubarms befestigt, dass ein inneres Kreuzgelenk 155, mit dem die zweite Gelenkwelle 154 mit der Zwischenwelle 156 in Eingriff steht, in der Arbeitsstellung im Wesentlichen senkrecht über der Schwenkachse 120 zu liegen kommt. Anders ausgedrückt liegt das innere Kreuzgelenk 155 im Wesentlichen in der aus einer Verlängerung der Schwenkachse 120 und der Senkrechten auf den Boden in Figur 1 gebildeten Ebene. Dadurch lässt sich der Hubarm besonders leicht verschwenken. Die Zwischenwelle 156 steht über ein äußeres Kreuzgelenk 157 mit der ersten Gelenkwelle 158 in Eingriff.

Die Zwischenwelle 156 und ihre Halterung sind dabei derart gegen den Hubarm geneigt angeordnet, dass der räumliche Antriebsbeugewinkel zwischen der zweiten Gelenkwelle 154 und der Zwischenwelle 156 in Arbeitsstellung mit ebenem Boden dem räumlichen Abtriebsbeugewinkel zwischen der Zwischenwelle 156 und der ersten Gelenkwelle 158 in etwa entspricht, also um weniger als 5° von diesem abweicht. Die Anordnung aus zweiter Gelenkwelle 154, Zwischenwelle 156 und erster Gelenkwelle 158 ist also in Form einer W-Beuge ausgeführt, wodurch Ungleichförmigkeiten der Drehbewegung kompensiert werden.

In der hier dargestellten exemplarischen Ausführung ist weiterhin die erste Gelenkwelle 158 in der Draufsicht, d. h. in einer senkrechten Projektion auf die Bodenfläche, parallel zu dem vorderen Hubarm ausgeführt, so dass sich der ebene Abtriebwinkel β₂ in Figur 2, an der Zwischenwelle 156 auch bei Längenverstellung des Hubarms und damit der ersten Gelenkwelle 158 nicht ändert. Da der Hubarm leicht gegen die parallele Richtung nach unten geneigt ist, ergeben sich auch in der Querschnittsebene (siehe Figur 1) Beiträge β₁' und β₂' zu den räumlichen Beugewinkeln an der Zwischenwelle 156. Der Abtrieb 152, die Zwischenwelle 156 und das Getriebe 105 sind jedoch derart in einer Höhe über dem Boden angeordnet, dass diese Beiträge in der Arbeitsstellung klein im Vergleich zu den ebenen Beugewinkeln β₁ und β₂ in der Projektion der Figur 2 sind. Durch Anordnung der Hauptantriebswelle 150 auf der Höhe der Halterung 160 und Umorientierung des Getriebes 105 nach oben in Figur 1 lassen sich diese Beiträge sogar annähernd vollständig vermeiden.

In der dargestellten Ausführung des Antriebsstrangs ändern sich bei Verschwenken des Hubarms um die Schwenkachse 120 aufgrund von Anpassungen an Bodenkonturen der zu bearbeitenden Fläche sowohl der ebene Antriebsbeugewinkel β₁ in der Draufsicht als auch der ebene Antriebsbeugewinkel β₁' in der Querschnittsansicht, während der räumliche Abtriebsbeugewinkel der Zwischenwelle 156 unverändert bleibt. Bei Verkippen des Rechkreisels 100 um seine in Fahrtrichtung ausgerichtete Schwenkachse ändert sich durch Verkippen des Getriebes auch der ebene Abtriebsbeugewinkel β₂' in der Querschnittsansicht. Bei den in der Landwirtschaft üblichen Unebenheiten der zu bearbeitenden Nutzfläche fallen diese Änderungen jedoch so gering aus, d. h. kleiner als 10°, vorzugsweise kleiner als 5°, dass die sich daraus ergeben Ungleichförmigkeiten der Antriebswellen vernachlässigt werden können.

In der in Figur 1 dargestellten Anordnung verläuft die erste Gelenkwelle 158 unter einem flachen Winkel gegen den teleskopierbaren Hubarm 110 bzw. 115 nach unten geneigt. Vorzugsweise kann das Getriebe 105 jedoch auch derart angeordnet werden, dass die erste Gelenkwelle 158 auch in der senkrechten Ebene des Querschnitts parallel zu dem Hubarm verläuft. In letzterem Fall bleibt eine Längenverstellung des Hubarms auch ohne Einfluss auf den ebenen Beugewinkel β₂' in der senkrechten Ebene an der Stelle des äußeren Kreuzgelenks 157.

Der Abtrieb 152 des Mittelgetriebes ist vorzugsweise so weit von dem Schnittpunkt von Hauptantriebswelle 150 und Hubarm entfernt, dass der ebene Winkel α des Abtriebs in der Projektion der Figur 2 45° entspricht. Bei Verschiebung des Abtriebs 152 in Richtung des Fahrwerksträgers, also in Figur 2 nach unten, wird der Abtriebswinkel α zwar kleiner, wodurch Ungleichförmigkeiten reduziert werden, jedoch wachsen die Beugewinkel β an der Zwischenwelle, wodurch mögliche Ungleichförmigkeiten wieder zunehmen. Ein Abtriebswinkel α von 45° stellt dabei einen guten Kompromiss dar.

In der in den Figuren 1 und 2 dargestellten Weiterbildung sind der kurze und der lange Schenkel des vorderen Hubarms starr miteinander verbunden, so dass ein Verschwenken des Hubarms lediglich um die Schwenkachse 120 möglich ist. Zudem sind sowohl die erste Gelenkwelle 158 als auch die zweite Gelenkwelle 154 teleskopierbar ausgebildet. Bei Verschwenken des Hubarms in die Transportstellung wird dabei zunächst der äußere Teil 115 des Hubarms in den inneren Teil 110 verschoben, wodurch die mehrfach teleskopierbare erste Gelenkwelle 158 ebenfalls verkürzt wird. Anschließend oder zumindest teilweise gleichzeitig wird der L-förmige Hubarm um die Schwenkachse 120 in Figur 1 nach oben und nach innen, bzgl. der Hauptantriebswelle 150, verschwenkt. Der Tragrahmen 125 kann dabei im Querschnitt in Form eines umgedrehten T ausgebildet sein, so dass der kurze Schenkel 112 des Hubarms parallel zu dem unteren Teil des Tragrahmens angewinkelt werden kann.

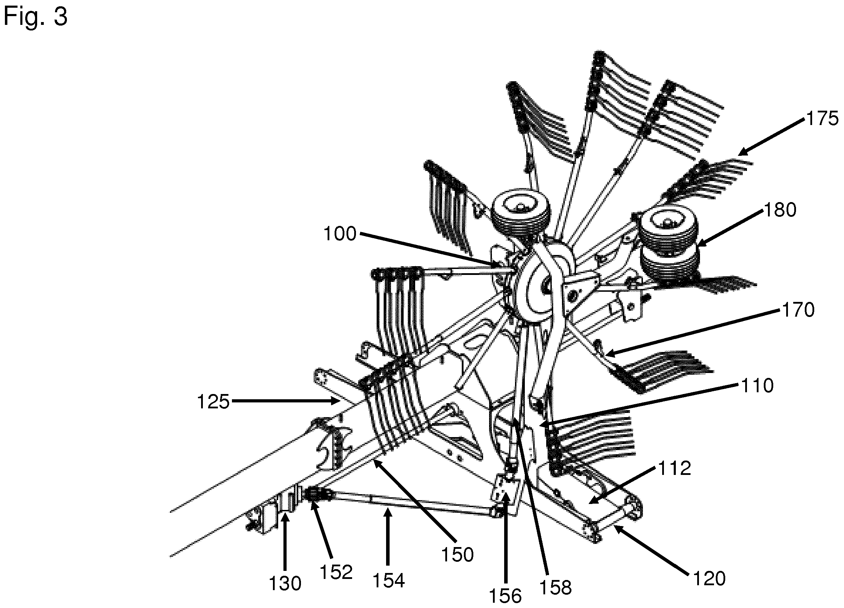

In Figur 3 ist die Heuwerbungsmaschine der zuvor beschriebenen Weiterbildung in einer Transportstellung dargestellt. Zur Verdeutlichung sind hier sowohl die Zinken 175 der Zinkenarme 170 als auch die Stützräder 180 des vorderen rechten Rechkreisels 100 dargestellt. Nach Anwinkeln des vorderen Hubarms sind sowohl Zinken als auch Stützräder nach außen gerichtet. Um ein seitliches Ausladen dieser Elemente beim Transport zu vermeiden, wodurch einerseits die Transportbreite vergrößert und andererseits eine Gefahrenquelle entstehen würde, ist der Hubarm in dieser Weiterbildung L-förmig ausgebildet. Nach Verschwenken des Hubarms in die Transportstellung ist wie in der Figur erkennbar der nunmehr im Wesentlichen senkrecht stehende lange Schenkel des Hubarms um die Länge des kurzen Schenkels 112 gegenüber der Schwenkachse 120 nach innen, d. h. zur Hauptantriebswelle 150 hin, versetzt angeordnet. Dadurch sind auch die Zinken und Stützräder entsprechend nach innen versetzt. Aus diesem Grund kann die Schwenkachse 120 so weit von der Hauptantriebswelle 150 angeordnet werden, dass die maximale Transportbreite genutzt werden kann.

Beim Verschwenken in die Transportstellung beschreibt das innere Kreuzgelenk 155 der Zwischenwelle 156 eine Kurve nach innen und unten und kommt schließlich auf Höhe des seitlichen Grundträgers des Tragrahmens 120 zu liegen. Die Teleskopierbarkeit der zweiten Gelenkwelle 154 und die veränderbare Winkelstellung des Abtriebs 152 ermöglichen dabei ein spannungsfreies Verschwenken. Die Schrägstellung der Halterung 160 bzgl. des inneren Teils 110 des Hubarms erlaubt in Transportstellung auf einfache Weise eine Überlappung der Halterung mit dem Grundträger. Aufgrund der an dem Hubarm befestigten Zwischenwelle und der einfachen dreiteiligen Anordnung des Antriebsstrangs lässt sich somit ein kostengünstiges und wenig fehleranfälliges Antriebskonzept eines Großschwaders mit maximaler Arbeitsbreite realisieren.

## Patentansprüche

1. Heuwerbungsmaschine, insbesondere zum Schwaden von landwirtschaftlichem Erntegut, mit zwei in Fahrtrichtung vorderen Rechkreiseln (100), die drehbar an je einem vorderen Hubarm gelagert sind, und mit mindestens einem in Fahrtrichtung hinteren Rechkreisel,
wobei mindestens einer der vorderen Hubarme längenverstellbar ist, wobei an einem Ende des vorderen Hubarms der entsprechende vordere Rechkreisel (100) gelagert ist und das andere Ende des vorderen Hubarms schwenkbar an einem Tragrahmen (125) der Heuwerbungsmaschine gelagert ist,
wobei der entsprechende Rechkreisel (100) über einen mehrteiligen Antriebsstrang (154, 156, 158) antreibbar ist, und
wobei der mehrteilige Antriebsstrang (154, 156, 158) eine starre Zwischenwelle (156) umfasst,
**dadurch gekennzeichnet,**
**dass** der mehrteilige Antriebsstrang (154, 156, 158) derart ausgebildet ist, dass er die Zwischenwelle (156) als Teil einer W-Beuge umfasst, und
die Zwischenwelle (156) derart über eine mit einem nicht verschiebbaren Segment (110) des vorderen Hubarms verbundene Halterung (160) gehaltert ist, dass ein Beugewinkel des Antriebsstrangs (154, 156, 158) an der Zwischenwelle (156) von einer Längenverstellung des Hubarms unberührt bleibt.

2. Heuwerbungsmaschine nach Anspruch 1,
wobei die Halterung (160) fest mit dem vorderen Hubarm verbunden ist.

3. Heuwerbungsmaschine nach Anspruch 1 oder 2,
wobei die Zwischenwelle (156) an einer dem Tragrahmen (125) zugewandten Seite des vorderen Hubarms gehaltert ist.

4. Heuwerbungsmaschine nach einem der Ansprüche 1 bis 3,
wobei die Zwischenwelle (156) an einem ersten Ende durch ein erstes Kreuzgelenk (157) mit einer ersten Gelenkwelle (158) in Eingriff steht, die ihrerseits mit einem Getriebe (105) des an dem vorderen Hubarm gelagerten Rechkreisels (100) in Eingriff steht.

5. Heuwerbungsmaschine nach Anspruch 4,
wobei die erste Gelenkwelle (158) mindestens zweifach teleskopierbar ist.

6. Heuwerbungsmaschine nach Anspruch 5,
wobei der vordere Hubarm gemeinsam mit der ersten Gelenkwelle (158) teleskopierbar ist.

7. Heuwerbungsmaschine nach einem der vorhergehenden Ansprüche,
wobei die Zwischenwelle (156) an einem zweiten Ende durch ein zweites Kreuzgelenk (155) mit einer zweiten Gelenkwelle (154) in Eingriff steht, die ein Mittelgetriebe (130) einer Hauptantriebswelle (150) der Heuwerbungsmaschine mit der Zwischenwelle (156) verbindet.

8. Heuwerbungsmaschine nach Anspruch 7,
wobei das Mittelgetriebe (130) mindestens einen Abtrieb (152) mit einer Winkelstellung in einem Bereich von 30° bis 60°, vorzugsweise mit einer Winkelstellung von 30°, 45° oder 60°, aufweist, und
wobei die zweite Gelenkwelle (154) mit dem mindestens einen Abtrieb (152) des Mittelgetriebes (130) in Eingriff steht.

9. Heuwerbungsmaschine nach Anspruch 7 oder 8,
wobei das zweite Kreuzgelenk (155) in einer Arbeitsstellung der Heuwerbungsmaschine im Wesentlichen in einer von einer Verlängerung einer Schwenkachse (120) des vorderen Hubarms und einer Senkrechten auf einer Aufstandsfläche der Heuwerbungsmaschine gebildeten Ebene liegt.

10. Heuwerbungsmaschine nach Anspruch 9,
wobei der vordere Hubarms im Wesentlichen L-förmig ausgebildet ist,
wobei ein kurzer Schenkel (112) des vorderen Hubarms mittels der Schwenkachse (120) schwenkbar an dem Tragrahmen (125) der Heuwerbungsmaschine gelagert ist,
wobei ein langer Schenkel (110, 115) des vorderen Hubarms längenverstellbar ist, und
wobei die Zwischenwelle (156) im Bereich einer Verbindungsstelle des kurzen und des langen Schenkels gehaltert ist.

11. Heuwerbungsmaschine nach Anspruch 9 oder 10,
wobei die zweite Gelenkwelle (154) durch ein drittes Kreuzgelenk mit dem Abtrieb (152) des Mittelgetriebes (130) in Eingriff steht, und
wobei das dritte Kreuzgelenk als ein Freilaufgelenk mit einem Drehmomentbegrenzer ausgebildet ist.

12. Heuwerbungsmaschine nach einem der Ansprüche 9 bis 11,
wobei die zweite Gelenkwelle (154) mindestens einfach teleskopierbar ausgebildet ist.

13. Heuwerbungsmaschine nach einem der vorhergehenden Ansprüche,
wobei eine maximale Arbeitsbreite der Heuwerbungsmaschine zwischen 10 m und 14 m, vorzugsweise zwischen 11 m und 12,5 m liegt.

14. Heuwerbungsmaschine nach einem der vorhergehenden Ansprüche,
wobei die Heuwerbungsmaschine zwei in Fahrtrichtung hintere Rechkreisel umfasst, die drehbar an je einem hinteren Hubarm gelagert sind, und
wobei mindestens einer der hinteren Hubarme längenverstellbar ist und schwenkbar an dem Tragrahmen (125) gelagert ist.

## Claims

1. Haymaking machine, in particular for swathing agricultural crop, with two front rotary rakes (100), viewed in the direction of travel, each of which is rotatably supported on a front lifting arm, and with at least one rear rotary rake, viewed in the direction of travel,
wherein at least one of the front lifting arms is adjustable in length, wherein at one end of the front lifting arm the corresponding front rotary rake (100) is supported and the other end of the front lifting arm is pivotably supported on a supporting frame (125) of the haymaking machine,
wherein the corresponding rotary rake (100) can be driven via a multi-part drive train (154, 156, 158), and
wherein the multi-part drive train (154, 156, 158) comprises a rigid intermediate shaft (156),
**characterized in**
**that** the multi-part drive train (154, 156, 158) is configured such that it comprises the intermediate shaft (156) as part of a W-bend, and
the intermediate shaft (156) is held via a holder (160) connected to a non-displaceable segment (110) of the front lifting arm, so that a bend angle of the drive train (154, 156, 158) at the intermediate shaft (156) is not affected by a length adjustment of the lifting arm.

2. Haymaking machine according to claim 1,
wherein the holder (160) is firmly connected to the front lifting arm.

3. Haymaking machine according to claim 1 or 2,
wherein the intermediate shaft (156) is held at a side of the front lifting arm facing the supporting frame (125).

4. Haymaking machine according to one of claims 1 to 3,
wherein the intermediate shaft (156) is engaged at a first end by a first universal joint (157) with a first cardan shaft (158), which in turn is engaged with a gearing (105) of the rotary rake (100) supported on the front lifting arm.

5. Haymaking machine according to claim 4,
wherein the first cardan shaft (158) is at least twice telescopic.

6. Haymaking machine according to claim 5,
wherein the front lifting arm can be telescoped together with the first cardan shaft (158).

7. Haymaking machine according to one of the preceding claims,
wherein the intermediate shaft (156) is engaged at a second end by a second universal joint (155) with a second cardan shaft (154), which connects a central gearing (130) of a main drive shaft (150) of the haymaking machine to the intermediate shaft (156).

8. Haymaking machine according to claim 7,
wherein the central gearing (130) has at least one output (152) with an angular position in a range from 30° to 60°, preferably with an angular position of 30°, 45° or 60°, and
that the second cardan shaft (154) is engaged with the at least one output (152) of the central gearing (130).

9. Haymaking machine according to claim 7 or 8,
wherein the second universal joint (155) in a working position of the haymaking machine is substantially located in a plane formed by an extension of a pivot axis (120) of the front lifting arm and a vertical line on a contact area of the haymaking machine.

10. Haymaking machine according to claim 9,
wherein the front lifting arm is substantially L-shaped,
wherein a short leg (112) of the front lifting arm is pivotably supported by means of the pivot axis (120) on the supporting frame (125) of the haymaking machine,
wherein a long leg (110, 115) of the front lifting arm is adjustable in length, and
wherein the intermediate shaft (156) is held in the region of a connection point of the short and the long leg.

11. Haymaking machine according to claim 9 or 10,
wherein the second cardan shaft (154) is engaged by a third universal joint with the output (152) of the central gearing unit (130), and
wherein the third universal joint is designed as a freewheel joint with a torque limiter.

12. Haymaking machine according to one of claims 9 to 11,
wherein the second cardan shaft (154) is designed to be at least simply telescopic.

13. Haymaking machine according to one of the preceding claims,
wherein a maximum working width of the haymaking machine is between 10 m and 14 m, preferably between 11 m and 12.5 m.

14. Haymaking machine according to one of the preceding claims,
wherein the haymaking machine comprises two rear rotary rakes, viewed in the direction of travel, each of which is rotatably supported on a rear lifting arm, and
wherein at least one of the rear lifting arms is adjustable in length and pivotably supported on the supporting frame (125).

## Revendications

1. Machine de fenaison, en particulier pour des andains de produits agricoles, comprenant deux javeleuses circulaires avant (100), dans la direction de conduite, qui sont supportées à rotation sur un bras de levage avant respectif, et comprenant au moins une javeleuse circulaire arrière, dans la direction de conduite,
au moins l'un des bras de levage avant pouvant être réglé en longueur, la javeleuse circulaire avant correspondante (100) étant supportée à une extrémité du bras de levage avant et l'autre extrémité du bras de levage avant étant supportée de manière pivotante sur un châssis porteur (125) de la machine de fenaison,
la javeleuse circulaire correspondante (100) pouvant être entraînée par le biais d'une chaîne cinématique en plusieurs parties (154, 156, 158), et
la chaîne cinématique en plusieurs parties (154, 156, 158) comprenant un arbre intermédiaire rigide (156),
**caractérisée en ce que**
la chaîne cinématique en plusieurs parties (154, 156, 158) est réalisée de telle sorte qu'elle comprenne l'arbre intermédiaire (156) en tant que partie d'un système de cardan W, et
l'arbre intermédiaire (156) est fixé par le biais d'une fixation (160) connectée à un segment non mobile (110) du bras de levage avant de telle sorte qu'un angle de cardan de la chaîne cinématique (154, 156, 158) au niveau de l'arbre intermédiaire (156) ne soit pas modifié par un réglage en longueur du bras de levage.

2. Machine de fenaison selon la revendication 1,
dans laquelle la fixation (160) est connectée fixement au bras de levage avant.

3. Machine de fenaison selon la revendication 1 ou 2,
dans laquelle l'arbre intermédiaire (156) est fixé à un côté du bras de levage avant tourné vers le châssis porteur (125).

4. Machine de fenaison selon l'une quelconque des revendications 1 à 3,
dans laquelle l'arbre intermédiaire (156) est en prise au niveau d'une première extrémité par le biais d'un premier joint universel (157) avec un premier arbre d'articulation (158) qui pour sa part est en prise avec un engrenage (105) de la javeleuse circulaire (100) supportée sur le bras de levage avant.

5. Machine de fenaison selon la revendication 4,
dans laquelle le premier arbre d'articulation (158) peut être télescopé au moins deux fois.

6. Machine de fenaison selon la revendication 5,
dans laquelle le bras de levage avant peut être télescopé conjointement avec le premier arbre d'articulation (158).

7. Machine de fenaison selon l'une quelconque des revendications précédentes,
dans laquelle l'arbre intermédiaire (156) est en prise au niveau d'une deuxième extrémité par le biais d'un deuxième joint universel (155) avec un deuxième arbre d'articulation (154) qui relie un engrenage central (130) d'un arbre d'entraînement principal (150) de la machine de fenaison à l'arbre intermédiaire (156).

8. Machine de fenaison selon la revendication 7,
dans laquelle l'engrenage central (130) présente au moins une prise de force (152) avec une position angulaire dans une plage de 30° à 60°, de préférence avec une position angulaire de 30°, 45° ou 60°, et
dans laquelle le deuxième arbre d'articulation (154) est en prise avec l'au moins une prise de force (152) de l'engrenage central (130).

9. Machine de fenaison selon la revendication 7 ou 8,
dans laquelle le deuxième joint universel (155), dans une position de travail de la machine de fenaison, est situé essentiellement dans un plan formé par un prolongement d'un axe de pivotement (120) du bras de levage avant et par une perpendiculaire à une surface d'appui de la machine de fenaison.

10. Machine de fenaison selon la revendication 9,
dans laquelle le bras de levage avant est réalisé essentiellement en forme de L,
dans laquelle une branche plus courte (112) du bras de levage avant est supportée au moyen de l'axe de pivotement (120) de manière à pouvoir pivoter sur le châssis porteur (125) de la machine de fenaison,
dans laquelle une branche plus longue (110, 115) du bras de levage avant est réglable en longueur, et
dans laquelle l'arbre intermédiaire (156) est fixé dans la région d'une zone de liaison de la branche courte et de la branche longue.

11. Machine de fenaison selon la revendication 9 ou 10,
dans laquelle le deuxième arbre d'articulation (154) est en prise par le biais d'un troisième joint universel avec la prise de force (152) de l'engrenage central (130), et
dans laquelle le troisième joint universel est réalisé sous forme de joint à roue libre avec un limiteur de couple.

12. Machine de fenaison selon l'une quelconque des revendications 9 à 11,
dans laquelle le deuxième arbre d'articulation (154) est réalisé de manière au moins une fois télescopable.

13. Machine de fenaison selon l'une quelconque des revendications précédentes,
dans laquelle une largeur de travail maximale de la machine de fenaison est comprise entre 10 m et 14 m, de préférence entre 11 m et 12,5 m.

14. Machine de fenaison selon l'une quelconque des revendications précédentes,
dans laquelle la machine de fenaison comprend deux javeleuses rotatives arrière, dans la direction de conduite, qui sont supportées à rotation sur un bras de levage arrière respectif, et
dans laquelle au moins l'un des bras de levage arrière est réglable en longueur et est supporté de manière à pouvoir pivoter sur le châssis porteur (125).
